(19) **Europäisches Patentamt / European Patent Office / Office européen des brevets**

(11) **EP 3 868 062 B1**

(12) **EUROPEAN PATENT SPECIFICATION**

(45) Date of publication and mention
of the grant of the patent:
**06.12.2023   Bulletin 2023/49**

(21) Application number: **18786333.7**

(22) Date of filing: **15.10.2018**

(51) International Patent Classification (IPC):
**H04L 45/122** *(2022.01)*      **H04L 45/128** *(2022.01)*
**H04L 45/12** *(2022.01)*

(52) Cooperative Patent Classification (CPC):
**H04L 45/122; H04L 45/124; H04L 45/128**

(86) International application number:
**PCT/EP2018/078025**

(87) International publication number:
**WO 2020/078527 (23.04.2020 Gazette 2020/17)**

(54) **METHODS AND APPARATUS FOR TRANSMITTING DATA OVER MULTIPLE PATHS IN A NETWORK**

VERFAHREN UND VORRICHTUNG ZUR ÜBERTRAGUNG VON DATEN ÜBER MEHRERE PFADE IN EINEM NETZWERK

PROCÉDÉS ET APPAREIL DE TRANSMISSION DE DONNÉES SUR UNE PLURALITÉ DE TRAJETS DANS UN RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.08.2021   Bulletin 2021/34**

(73) Proprietor: **Telefonaktiebolaget LM Ericsson (publ)**
**164 83 Stockholm (SE)**

(72) Inventors:
• **FIASCHI, Giovanni**
**16480 Stockholm (SE)**
• **CALABRESE, Francesco Davide**
**16480 Stockholm (SE)**
• **CECCARELLI, Daniele**
**16480 Stockholm (SE)**

(74) Representative: **Ericsson**
**Patent Development**
**Torshamnsgatan 21-23**
**164 80 Stockholm (SE)**

(56) References cited:
**US-A1- 2013 223 225      US-A1- 2017 353 244**
**US-B1- 6 542 469      US-B1- 7 296 087**

**Description**

Technical Field

Embodiments of the present invention relate to methods and apparatus for transmitting data between a source node and a destination node in a telecommunications network. In particular, methods and apparatus disclosed herein relate to the selection of multiple paths through a network based on the distance between the source node and destination node, and the diversity between the multiple paths.

Background

US 6,542, 469 describes methods for determining at least two pre-computed paths to a destination in a communications network. The two paths are maximally disjoint. Maximally disjoint paths are paths where the number of links or nodes common to the two paths is minimized. This minimization is given a priority over other path considerations, such as bandwidth or cost metrics.

US 2013/223,225 describes a routing node determining a risk-sharing metric between pairs of nodes in a shared-media communication network, and may then compute a plurality of routes that minimizes the risk-sharing metric between the routes, to correspondingly route traffic according to the computed plurality of routes.

When calculating routing between a source node and a destination node in a telecommunications network, some algorithms are based on determining the shortest path between the source node and the destination node or determining the path with a minimal weighted distance. For example, one "best" path may be selected based on some distance criteria associated with the path.

It is often desirable to set up multiple paths, to take advantage of network redundancy, for example for protection and load balancing reasons. When selecting multiple paths, the distance criteria may still be pursued and applied to the entire set of paths. At the same time, the paths of the set may need to exhibit a certain degree of diversity, to be useful and effective.

To find a route in a telecommunication network, a shortest path algorithm (for example, the Dijkstra algorithm or Bellman-Ford algorithm) may be used, to minimize the resources used in the path. If multiple paths are to be searched, to allow network survivability in case of network resource faults, or to distribute the traffic on a larger set of resources, other algorithms may be used. However, the distance minimization criteria may still be followed to determine which paths to use.

In addition to this, a certain degree of diversity may be desired between alternative paths. For example, if two alternative paths overlap for most of the route between the source node and the destination node, then transmitting traffic over both paths provides little benefit as a single fault would probably affect both paths simultaneously and sending traffic over both paths would not avoid this fault.

Distance and diversity requirements may be conflicting. For example, after finding the shortest path, two alternative routes may exist between the source node and the destination node. A first alternative path may have a small distance or weighted distance (i.e. may use a small amount of network resources), but may overlapping mostly with the first shortest path (for example the first alternative path and first path may comprise a high number of common links between nodes). A second alternative path may be diverse from the first shortest path (e.g. may not have very many common links between nodes) but may have a high distance (e.g. high number of links between nodes) or weighted distance, which occupies a large set of network resources.

The k-shortest path problem is the classical definition of the described situation. Two known k-shortest paths algorithms are Yen (1971) and Eppstein (1998).

However, neither of these algorithms effectively take diversity. For example, the k shortest paths may be required to differ in at least in one link between nodes in the path.

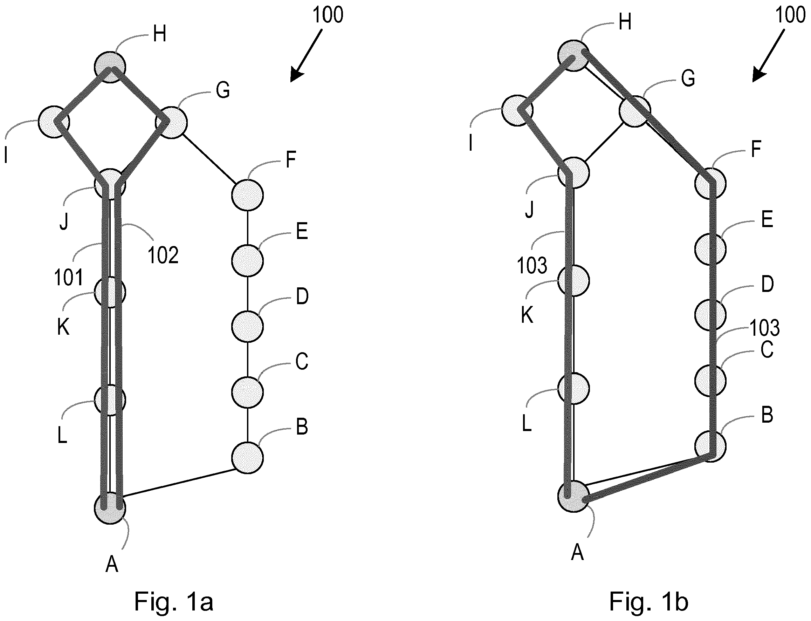

**Figure 1a** illustrates an example of 2 shortest paths found by a k-shortest paths algorithm.

In the example, the k-shortest paths algorithm is performed for k=2 in the network 100 comprising of nodes A to L. In this example, the source node is node A and the destination node is node H. The k-shortest paths algorithm finds two paths path 101 and path 102. However, although these paths both constitute paths utilizing only five links through the network 100 to get from node A to node H, there are only two links in the two paths which are not the same.

Figure 1b illustrates two paths 103 and 104 between node A and node H which, although path 104 is longer, using seven links in the network 100, would be a better selection for the purposes of maintaining diversity.

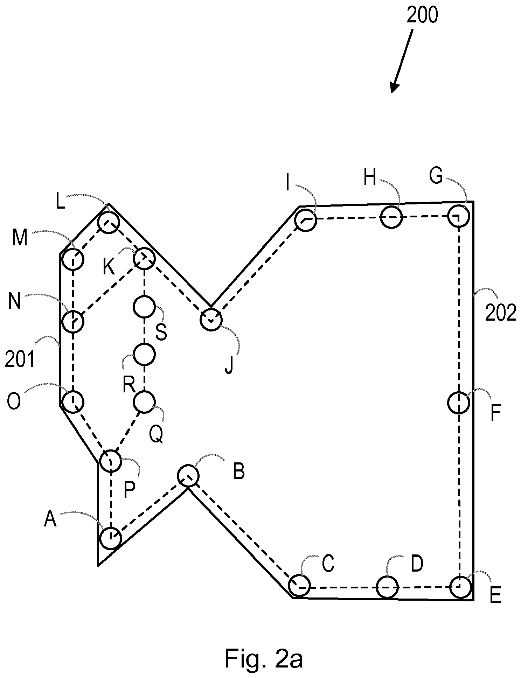

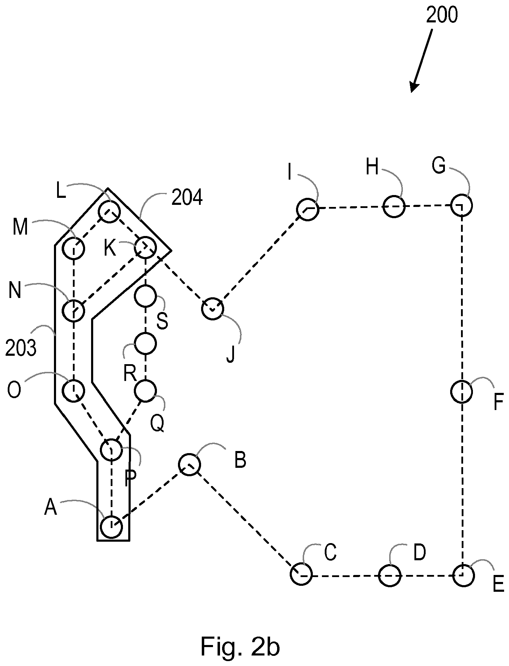

There are also algorithms which can find the shortest path pairs between a source node and a destination node, wherein the paths in the pair have complete link or node diversity (for example the Bhandari and Suurballe algorithms). These algorithms have the following limitations: they only find path pairs, so no k-path sets are possible; they only find paths in complete diversity, so there is no solution if only paths which partially overlap are available Furthermore, if a complete diversity solution is very costly for example as illustrated in Figure 2a, a partial overlap may be preferable as illustrated in Figure 2b. However, partial overlaps would not be found by these algorithms.

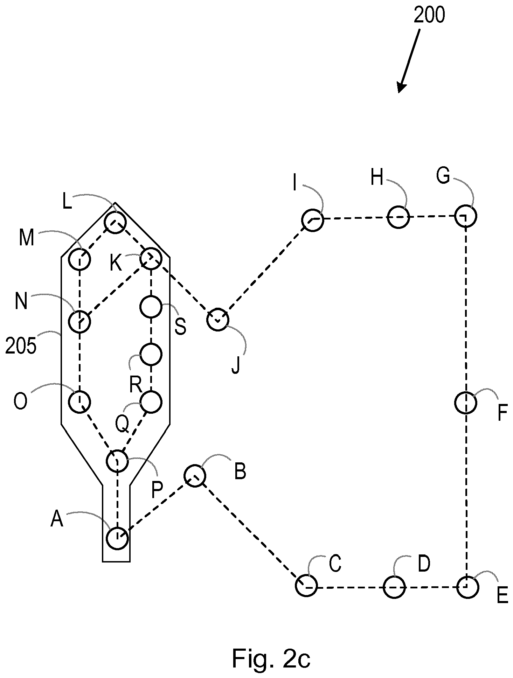

Specifically, in Figures 2a, 2b and 2c, the network 200 comprises node A to S where the source node is node A and the destination node is node L. A complete diversity path algorithm would find the paths 201 and 202 as illustrated in Figure 2a. However, the path 202 is extremely costly. The k-shortest paths algorithm may find paths 203 and 204 illustrated in Figure 2b. As these paths are both consist of 5 links. However, it may be preferable to find the paths 205 and 206 illustrated in Figure 2c. These two paths have a common link, i.e. the link between the node A and node P, but not as great an overlap as the paths 203 and 204, which share all but two links. The path 206 uses 6 links whereas the path 202 uses 11 links. None of the algorithms described above would be able to select the paths 205 and 206 from the network 200.

Some complex algorithms are available which define diversity and find a set of kpaths subject to the constraint that the diversity between any two paths in the set is higher than a given threshold. However, this formulation is not flexible, as the exact threshold must be given in advance, and once the threshold is crossed, the algorithm minimizes only the distance between the source node and the destination node.

Summary

According to some embodiments there is provided a method for transmitting data between a source node and a destination node in a telecommunications network comprising a network of nodes, wherein a plurality of possible paths between the source node and destination node are available. The method comprises determining a first path from the plurality of possible paths, wherein the first path comprises a path with a smallest distance between the source node and the destination node in the plurality of paths; adding the first path to a set of paths; determining a next path based on a cost of the next path, wherein the cost of the next path comprises a first component indicating a distance between the source node and the destination node in the next path, and a second component representative of common links between nodes in the next path and links between nodes in paths already in the set of paths; adding the next path to the set of paths; wherein the step of determining the next path comprises determining the next path such that the cost of the next path is a lowest cost of compared to costs of other paths in the plurality of possible paths; and configuring transmission of the data from the source node to the destination node using paths in the set of paths.

According to some embodiments there is provided a network node for configuring transmission of data between a source node and a destination node in a telecommunications network comprising a network of nodes, wherein a plurality of possible paths between the source node and destination node are available. The network node comprises processing circuitry configured to: determine a first path from the plurality of possible paths, wherein the first path comprises a path with a smallest distance between the source node and the destination node in the plurality of paths; add the first path to a set of paths; determine a next path from the plurality of possible paths based on a cost of the next path, wherein the cost of the next path comprises a first component indicating a distance between the source node and the destination node in the next path, and a second component representative of common links between nodes in the next path and links between nodes in paths already in the set of paths; add the next path to the set of paths, wherein the processing circuitry is further configured to determine the next path by determining the next path such that the cost of the next path is a lowest cost compared to costs of other paths in the plurality of possible paths; and configure transmission of the data from the source node to the destination node using paths in the set of paths.

Brief Description of the Drawings

Figure 1a illustrates an example of 2 shortest paths found by a k-shortest paths algorithm;

Figure 1b illustrates two paths with complete diversity;

Figure 2a illustrates two paths with complete diversity through the network 200;

Figure 2b illustrates two shortest paths through the network 200;

Figure 2c illustrates preferred paths through the network 200;

Figure 3 illustrates a method for transmitting data over multiple paths according to some embodiments;

Figures 4a to 4e illustrate the selection of the 1st 2nd, 3rd, 4th and 5th paths between nodes P23 and P55 in the 10x10 mesh respectively;

Figure 5 illustrates an example network comprising three nodes A, B and C and four links with two different links between each of the two node pairs;

Figures 6a to 6e illustrate the selection of the $1^{st}$ $2^{nd}$, $3^{rd}$, $4^{th}$ and $5^{th}$ paths between nodes P23 and P55 in the 10x10 mesh respectively;

Figures 7a and 7b illustrate the difference in path selection in use of the modified Dijkstra algorithm according to embodiments herein, and the use of a k-shortest paths algorithm;

Figure 8 illustrates a network node according to some embodiments.

Detailed description

The following sets forth specific details, such as particular embodiments for purposes of explanation and not limitation. But it will be appreciated by one skilled in the art that other embodiments may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers that are specially adapted to carry out the processing disclosed herein, based on the execution of such programs. Nodes that communicate using the air interface also have suitable radio communications circuitry. Moreover, the technology may additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing modules or one or more controllers, and the terms computer, processor, processing module and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Given that for multiple paths selected in a telecommunications network, both the resources utilized by the selected paths (e.g. distance/length of the path) and their diversity (e.g. diversity of the paths, based on the common links) is of importance as illustrated above, embodiments described herein provide methods and apparatus for selecting multiple paths in a telecommunication network based on both a component indicating the distance between the source node and the destination node, and a component representative of the common links between the path being selected and paths which have already been selected, or representative of a number of common links between the path being selected and paths which have already been selected. For example, a component representative of the common links may be a component representative of a length (distance) of the common links of the path being evaluated, e.g. the number of common links with paths already in the set. In some aspects, the component representative of the common links is representative of weighted common links, e.g. a weight is applied to each link based on a characteristic of the link. In some aspects, the component is representative of all the common links, e.g. the total length of the common links. In some aspects, the component representative of the common links may be considered as a component indicating a disparity (i.e. diversity or difference) in routing between paths, e.g. based on links and/or nodes which are not in common with already determined paths.

There is therefore provided a heuristics-based algorithm to find shortest paths in a telecommunication network with appropriate diversity. The objective may be considered as to find a set of paths reducing a combination of a total distance between the source node and the destination node and a total diversity between the selected paths.

In some examples, an algorithm is provided to find a set S of k paths between a source node and a destination node, with the following objective:

$$\text{maximize } c(S) + \lambda \sum \{u,v\}:u,v \in S \; s(u, v) \qquad\qquad (1)$$

$$\text{subject to } |S| = k$$

with S the set of k paths, c the path distance and s the path similarity (to be defined below).

In this algorithm the parameter $\lambda$ may mediate between the diversity between the selected paths and the distance of each selected path. Even with small $\lambda$ values, the value of $\lambda$ can select between two paths of equal distance. With larger values of $\lambda$, it is possible to sacrifice the distance between the source node and the destination node in favor of a better diversification between the selected paths.

However, the equation (1) assumes that the paths through the network have already been calculated, and the solution is then to select from the set of all paths through the network according to equation (1).

This is not always computationally convenient, as finding many paths to select the ones with diversity later, may require the creation of large set comprising all the possible paths first. However, in some examples, thousands of possible paths of equal distance may exist between networks comprising only tens of nodes.

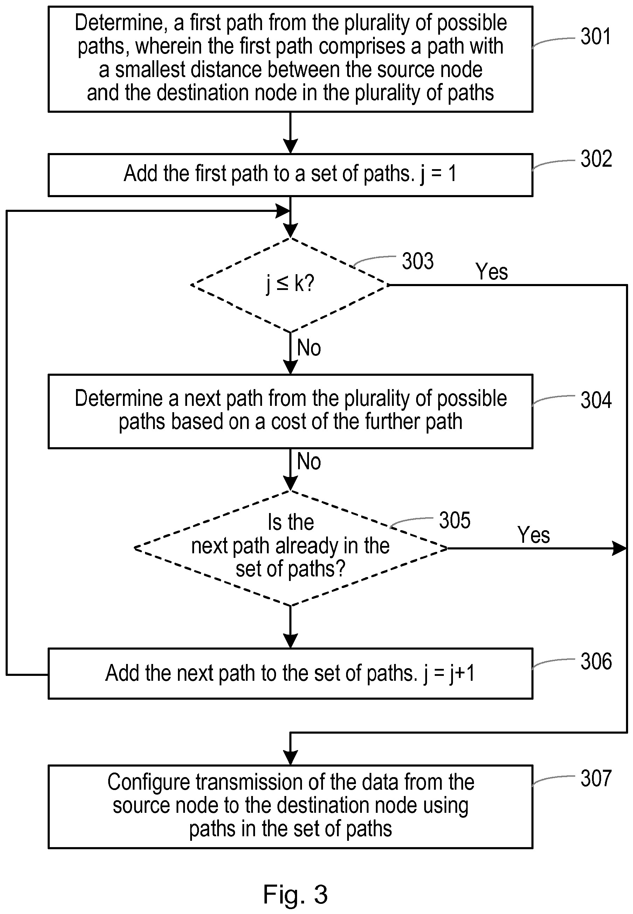

**Figure 3** illustrates a method for transmitting data between a source node and a destination node in a telecommunications network comprising a network of nodes, wherein a plurality of possible paths between the source node and destination node are available, according to some embodiments.

In some embodiments the method may be performed by a centralized Software Defined Network (SDN) controller. In some embodiments the method may be performed by a controller node or each node in the network.

In step 301 the method comprises determining a first path from the plurality of possible paths, wherein the first path comprises a path with a smallest distance between the source node and the destination node in the plurality of paths.

In step 302, the method comprises adding the first path to a set of paths. The set of paths may be defined as H, and may be updated as each path is selected. At this step the number of paths in the set, j, is set to 1. In some aspects, the set of paths is empty prior to the first (i.e. shortest) path being added. For an empty set, i.e. first path being determined, there is full disparity (no common links) since there is no path for comparison. In other example, the set of paths may already contain one or more preconfigured paths.

In some examples, at step 303, the method checks whether enough paths have been found. For example, if k paths are needed, the method checks whether the number of paths in the set, j, is less than k. If enough paths have been found, the method passes to step 307 in which the method comprises configuring transmitting of the data from the source node to the destination node using paths in the set of paths.

If j is less than k the method passes to step 304. In step 304, the method comprises determining a next path based on a cost of the next path, wherein the cost of the next path comprises a first component indicating a distance between the source node and the destination node in the next path, and a second component representative of common links between nodes in the next path and links between nodes in paths already in the set of paths, for example representative of a number of common links between nodes in the next path and links between nodes in paths already in the set of paths.

In some examples, the method determines a further path based on a weighted combination of the cost (i.e. distance or length) of the path and an amount of commonality only with the already found path(s). As such, the determination of the parameter indicating the common links is based only on the path(s) in the set, which provides for efficient processing.

The next path may comprise a $(j+1)^{th}$ path, where j is an integer value representing a number of paths in the set of paths on determination of the next path.

In some examples, the method may then pass to step 305 in which the method checks whether the selected next path is already in the set of paths. If the next path is already in the set of paths, the method passes to step 307 in which the method comprises configuring transmission of the data from the source node to the destination node using paths in the set of paths. If the next path is not already in the set of paths, the method passes to step 306.

In other words, the method may comprise performing the step of determining for k paths. However, in some examples, if the (k-n)th path determined is equal to a path in the set of paths; only the k-(n+1) paths already found are added to the set of paths. However, if all k paths are distinct, the method comprises adding the k paths to the set of paths.

In step 306 the method comprises adding the next path to the set of paths. The number of paths in the set of paths, may then be increased by 1, e.g j = j+1. The method may then return to step 303.

In step 307 the method comprises configuring transmission of the data from the source node to the destination node using paths in the set of paths. For example, where method performed by source node, the method may comprise transmitting the data from the source node to the destination node. However, where the method is performed by a controller node, the method may comprise transmitting an indication of the paths in the set of paths to the source node, for example by means of a configuration protocol (e.g. Network Configuration Protocol (NETCONF) or Path Computation Element Protocol (PCEP)) and from the source node to the nodes in the paths via a signaling protocol (e.g., Resource Reservation Protocol - Traffic Engineering (RSVP-TE)) or embedded in the data packet overhead (segment routing).

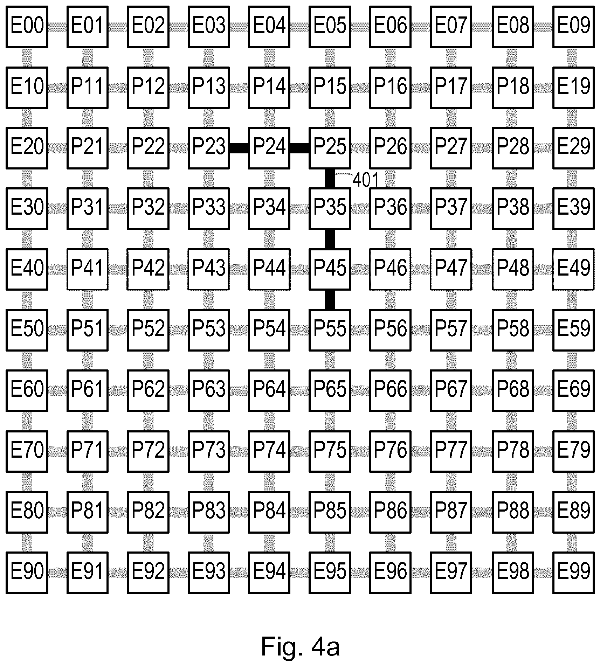

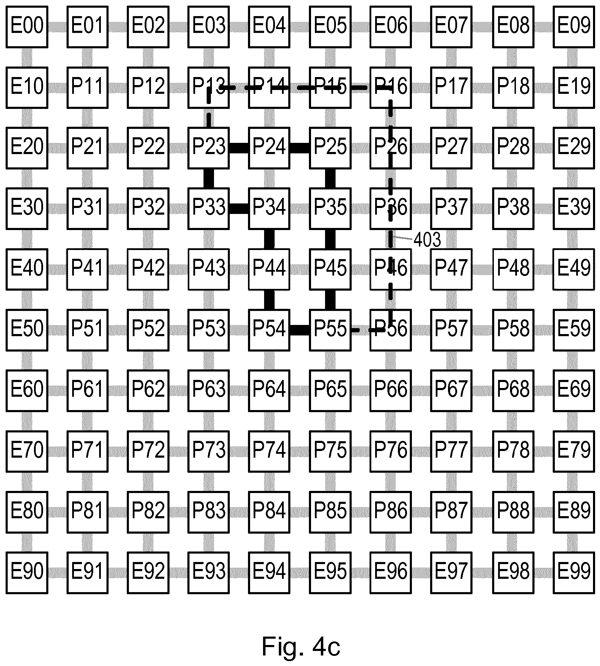

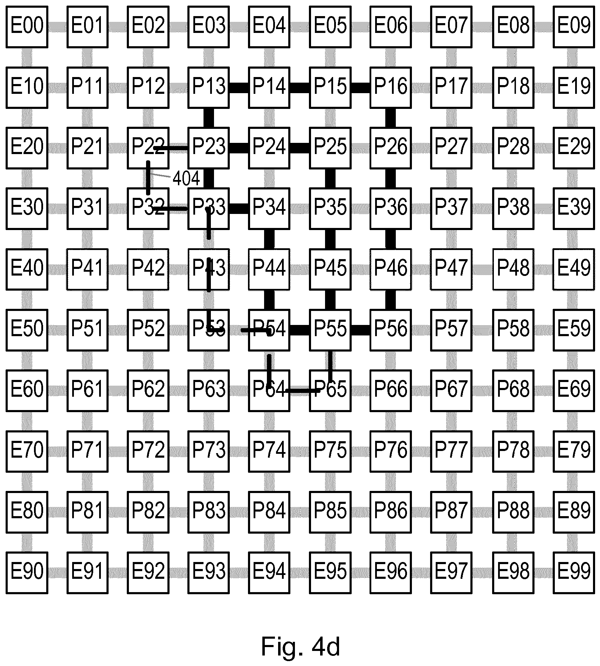

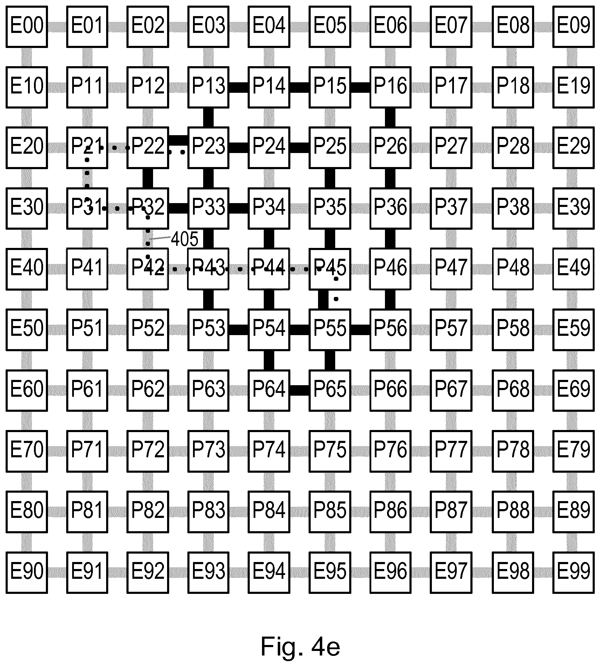

For example, consider an example 10x10 mesh of nodes illustrated in Figure 4a. In this example, the source node is the node P23 and the destination node is node P55. The first path therefore comprises a path with a smallest distance between the node P23 and P25. In this example, there are a number of different paths having only 5 links, and the path 401 is selected as the first path in step 301.

In particular, step 301 of Figure 3 may comprise selecting the first path using a shortest paths algorithm, or may select the first path based on a cost of the first path comprising a first component indicating a distance between the source node and the destination node first, and a second component representative of a number of common links between nodes in the first path and links between nodes in the set of paths. However, as this is the first path selected, the set of paths is empty, and the second component of the cost of the first path will be zero.

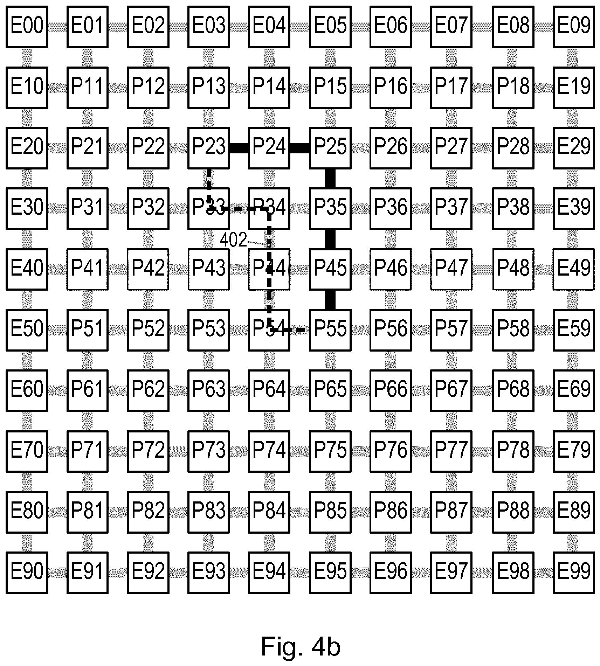

In Figure 4b, the 2nd path (i.e. j+1 = 2) is determined. This path 402 is found based on a component indicating distance between the source node and the destination node, and a component representative of a number of common links between the node in the 2nd path and the links between nodes in j paths in the set of paths.

For example, if the method is searching for $k$ paths, and $j$ of the paths have already been found (i.e. $j < k$). Path $p_{j+1}$ must now be calculated for example, with the algorithm described below. The algorithm described here is a modified Dijkstra algorithm, however, it will be appreciated that a different shortest path algorithm may be modified (e.g., Bellman-Ford) in a similar manner.

In this example, the modified Dijkstra algorithm receives as input: the network graph which in this example comprises the 10x10 mesh; the source node and destination nodes, which in this example comprises node P23 and P55; and the set H of the previously computed paths. It will be appreciated that when the algorithm first starts, the set H may comprise no paths. However, in some examples, paths may be already included in the set H, for example, if a particular path has been chosen as it passes via a node which also requires the transmitted data. The algorithm may then be performed to find each path to then add to the set of paths. In some examples therefore, the algorithm may be performed k times.

In some examples, for each node in the network graph the algorithm maintains the first component, herein noted as $c(p_{j+1})$, as the distance from the source node of the path $p_{j+1}$ calculated so far and the predecessor of the node in $p_{j+1}$. In some examples, the first component $c(p_{j+1})$, is calculated as

$$c(p_{j+1}) = \sum_l \beta_l,$$

where $l$ are links in the $(j+1)^{th}$ path and $\beta_l$ is a link weighting factor associated with a link $l$. $\beta_l$ may in some examples be set as higher for some links in the path, for example to avoid heavy traffic passing through that particular link.

In this example, the algorithm also maintains on each node, a vector of j numbers representing intersection costs $c_i(p_{j+1},p_i)$ between the $(j+1)^{th}$ path, $p_{j+1}$ and each of the previously found $j$ paths, $p_i$ in the set of paths $H$.

The value of the intersection cost path $p_{j+1}$ and path paths, $p_i$ may be calculated as

$$c_i(p_{j+1},p_i) = \sum_m \beta_m,$$

where m are links between nodes in the $(j+1)^{th}$ path $p_{j+1}$ which are also in the one of the paths in the set of paths $p_i$ and $\beta_m$ is a link weighting factor associated with a link m.

In other words, for each link m in the path $p_{j+1}$, the weighting of the link $\beta_m$ is added to $c_i(p_{j+1},p_i)$ if the link m is in $p_i$, otherwise $c_i(p_{j+1},p_i)$ remains unchanged.

A similarity between a path $p_{j+1}$ and one previously computed path $p_i$ may be defined as the ratio between the cost of the intersection between the path $p_{j+1}$ and the path $p_i$ and the first component of path $p_i$:

$$Sim(p_{j+1},p_i) = \frac{c_i(p_{j+1},p_i)}{c(p_i)}. \qquad (2)$$

However, it will be appreciated that there may be several ways to definite the similarity between two paths. A straightforward one would be cost of the intersection divided by cost of union. However in the definition of equation (2) the cost of union is replaced with the first component of only the already computed path $p_i$ such that the first component of the path $p_{j+1}$ is left out of the calculation. This avoids encouraging the selection of $p_{j+1}$ from utilizing more network resources.

A similarity between the path $p_{j+1}$ and the set $H$ of paths that has been previously computed may be defined as the Euclidean norm of the similarity between $p_{j+1}$ and all the paths in $H$:

$$Sim(p_{j+1}, H) = \sqrt{\Sigma_i (Sim(p_{j+1}, p_i)^2)} , p_i \in H . \qquad (3)$$

In some examples, the second component comprises the similarity between the path $p_{j+1}$ and the set $H$ of paths that has been previously computed.

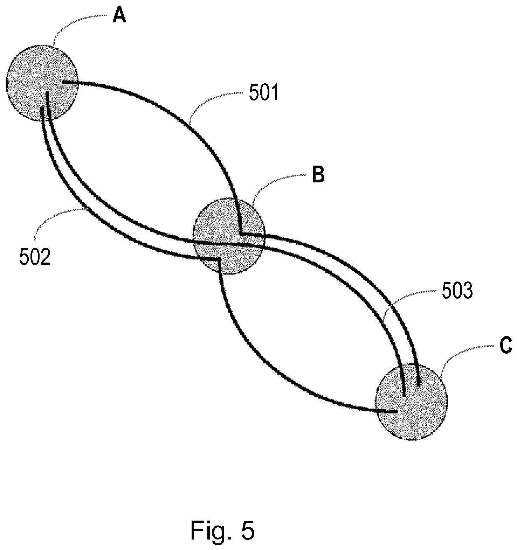

The use of the Euclidean norm in equation (3) to sum similarities to paths in the set, is motivated by the example illustrated in Figure 5. In Figure 5 the network 500 comprises three nodes A, B and C and four links with two different links between each of the two node pairs, all having the same link weighting.

If for example, the path 501 and 502 are already in the set of paths. A new path 503 has a similarity ½ with each of them.

A replica of the path 502 would instead have similarity 1 with the path 502 already selected and similarity 0 with the path 501. If a simple sum was used to determine the similarity between a new path and the paths in the set, both the path 503 and a replica of the path 502 would have a similarity 1 with the set composed of the paths 501 and 502. However, by using the Euclidean norm, instead, the path 503 would have a similarity with the set of:

$\sqrt{1/2^2 + 1/2^2} = \sqrt{2}/2$ , whereas a replica of the path 502 would have a similarity with the set of $\sqrt{1^2 + 0^2} = 1$

Therefore, although composed of only already used links, a new alternative routing is then preferred.

In some examples, step 304 of Figure 3 therefore comprises calculating the first component as:

$$c(p_{j+1}) = \sum_l \beta_l,$$

as described above, and calculating the second component as:

$$\lambda Sim(p_{j+1}, H).$$

The cost of the path $p_{j+1}$ may therefore be calculated as:

$$c(p_{j+1}) + \lambda Sim(p_{j+1}, H) ,$$

where $\lambda$ is a weighting factor.

In some examples, a weighting parameter, e.g. weighting parameter $\lambda$, may be set based on a relative importance of network resources (or distance/length) and diversity between paths in the telecommunications network. In other words, in some examples, it may be desirable for selected paths to be as diverse as possible, at the expense of using extra network resources (additional distance/length of the path). In these examples, the value of $\lambda$ may be set as a higher value, for example 50 to 100. However, in circumstances where it is less important for the selected paths to be diverse, the value of A may be set as a lower value for example 1 to 5. It will be appreciated that any suitable value of $\lambda$ may be used. Thus, one or more weighting parameters is used to determine a relative weight between a first component indicating a distance (length) between the source node and the destination node in the next path, and a second component representative of an amount of disparity in links between nodes in the path being determined and links between nodes in paths already in the set of paths.

In some examples therefore the step 303 comprises determining the $(j + 1)^{th}$ path such that the cost of the $(j + 1)^{th}$ path is lower than costs of all other paths in the plurality of possible paths.

**Figures 4a to 4e** illustrate the selection of the 1st 2nd, 3rd, 4th and 5th paths between nodes P23 and P55 in the 10x10 mesh respectively. In this example, each link between the nodes is weighted equally, and the value of $\lambda$ is set as 100. It will be appreciated, that each path is found consecutively, based on the previously found paths. The 1st to 4th paths 401, 402, 403 and 404 selected in this example happen to all be totally diverse paths, with no links overlapping. However, the 5th path selected, overlaps with the 4th path in the link between node P22 and node P23, and the 1st path with the link between node P45 and node P55.

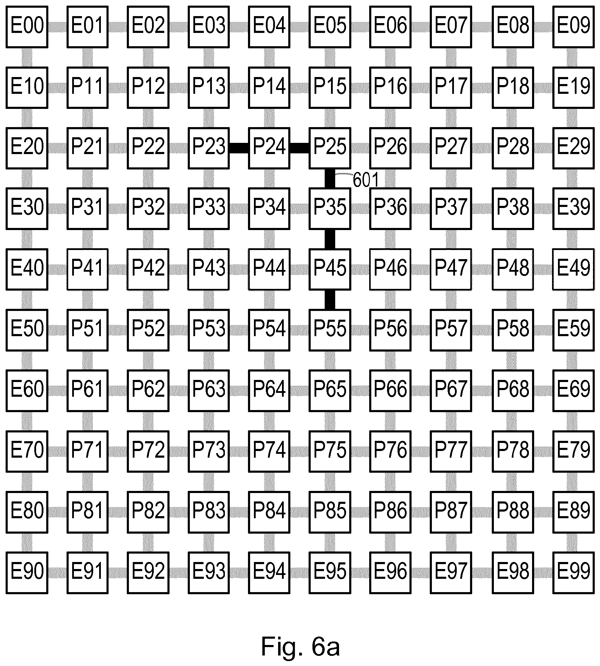

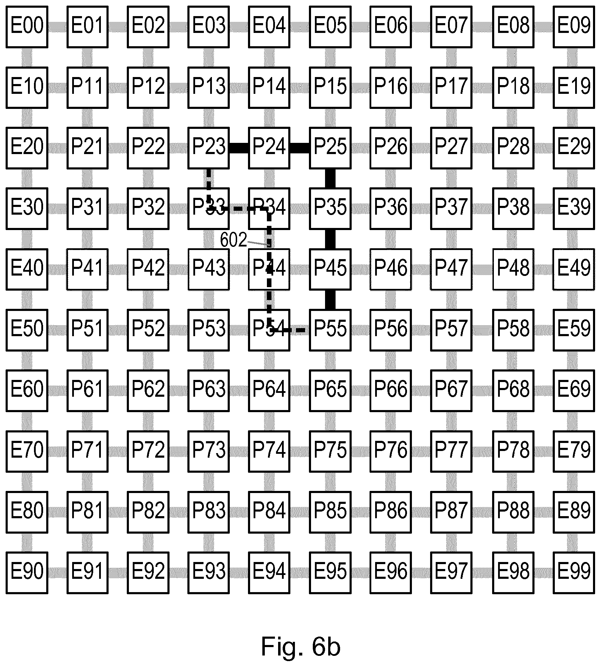

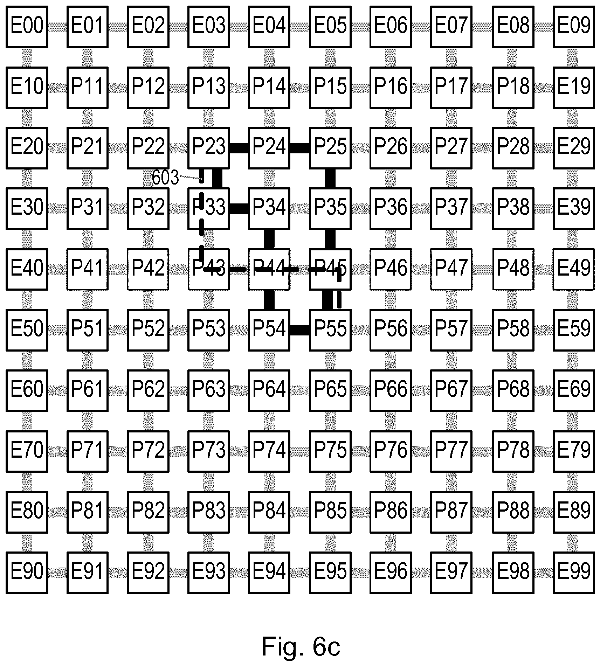

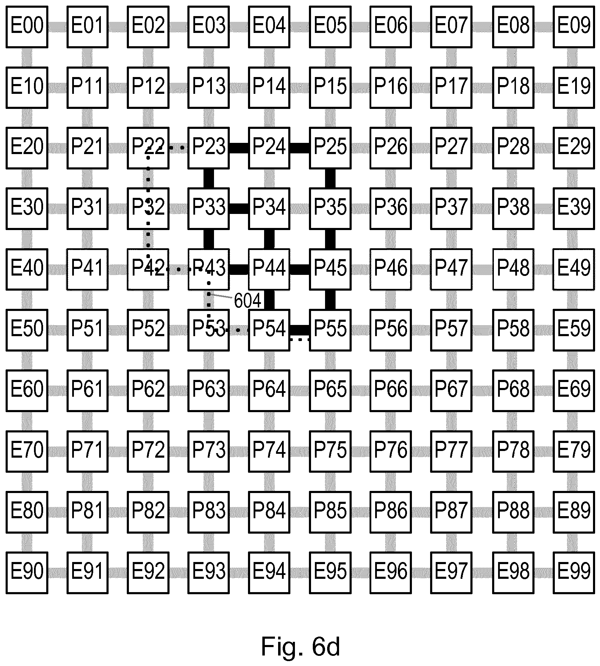

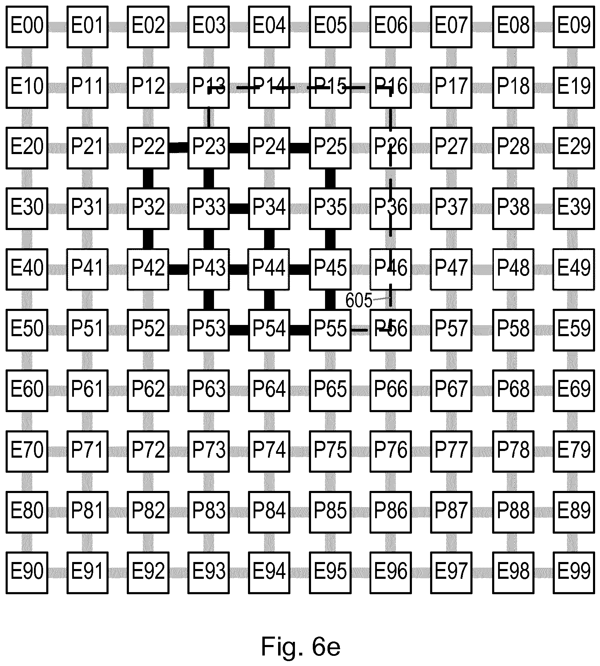

**Figures 6a to 6e** illustrate the selection of the 1st 2nd, 3rd, 4th and 5th paths 601, 602, 603, 604 and 605 between nodes P23 and P55 in the 10x10 mesh respectively. However, in this example, each link between the nodes is weighted equally, but the value of $\lambda$ is set as 10. It will be appreciated, that each path is found consecutively, based on the previously found paths. In this example the 1st and 2nd paths 601 and 602 selected happen to be totally diverse paths, with no links overlapping. However, the 3<sup>rd</sup> path selected 603, overlaps with the 1<sup>st</sup> path 601 in the link between node P45 and node P55, and the 2<sup>nd</sup> path 602 with the link between node P23 and node P33.

The 4<sup>th</sup> path selected, 604, overlaps with the 2<sup>nd</sup> path 602 with the link between node P54 and node P55. The 5<sup>th</sup> path selected 605 does not overlap with any preceding path.

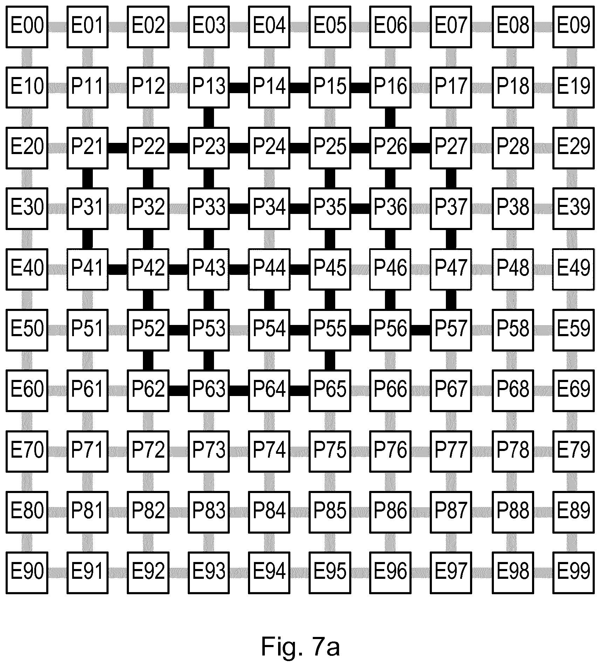

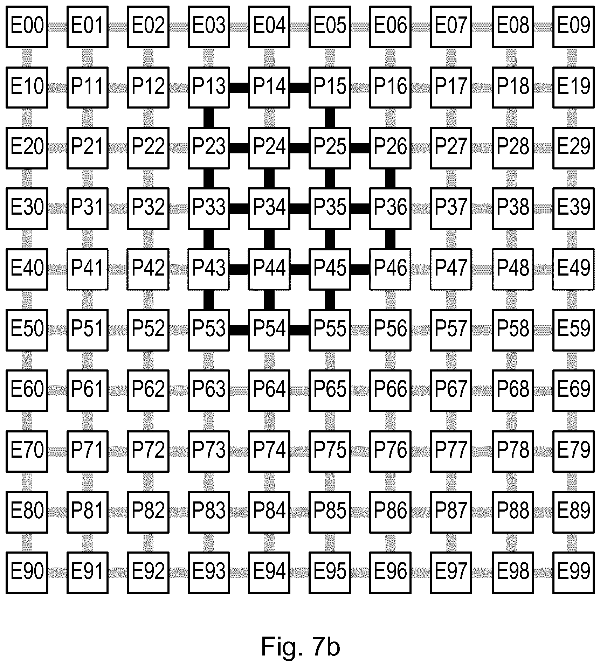

**Figures 7a and 7b** illustrate the difference in path selection in use of the modified Dijkstra algorithm according to embodiments herein, and the use of a k-shortest paths algorithm. In this example Figure 7a illustrates 15 paths selected by using the modified Dijkstra algorithm as described herein. Figure 7b illustrates 15 paths selected using a k-shortest paths algorithm. As can be seen the diversity of links used in Figure 7a is much greater than the diversity of links used in Figure 7b.

The modified Dijkstra algorithm according to some embodiments may be exemplified by the following pseudo-code:

```
modifiedDijkstra(source, destination, H, lambda):
    create vertex set Q
    for each vertex v in Graph:          // Initialization


        dist[v] ← INFINITY          // Unknown distance (formula
                                    // with similarity) from
                                    // source to v


        pure_dist[v] ← INFINITY          // Unknown pure distance
                                    // from source to v


        prev[v] ← UNDEFINED          // Previous node in optimal
                                    // path from source


        intersection[v,pi] ← EMPTY          // Intersection list between
                                    // paths pi and path to v


        add v to Q                  // All nodes initially in Q
                                    // (unvisited nodes)


        dist[source] ← 0            // Distance (formula with
                                    // similarity)
                                    // from source to source
```

```
pure_dist[source] ← 0               // Pure distance from source
                                    // to source

while Q is not empty:
    u ← vertex in Q with min dist[u] // Node with the least distance
                                    // (formula with similarity)
                                    // will be selected first
    remove u from Q

    for each neighbor v of u:       // where v is still in Q.
        new_pure_dist ← pure_dist[u] + cost(u, v)
        new_intersection[pi] ←
            intersection[v, pi] + cost(u, v) * is_member([u,v], pi)

        new_dist ←
            new_pure_dist +
            lambda * norm(sum(new_intersection(pi)/cost(pi)))

        if new_dist < dist[v]:          // A shorter path to v
                                        // has been found
            dist[v] ← new_dist
            prev[v] ← u
            pure_dist[v] ← pure_dist
            intersection[v,pi] ← new_intersection[pi]

    return dist[], pure_dist[], prev[]
```

With the aforementioned algorithm, it is now possible to define a cycle to find a set of k paths with diversity (if they exist). The cycle is may be described by the following pseudo-code

```
01    S = ∅
02    for i in 1:k
03        u = modifiedDijkstra(o, d, S, lambda)
04        if u ϵ S break
05        insert u in S

06        end for
07        return S
```

However, the modified Dijkstra algorithm does not guarantee to find different paths at each step. Although the new formula for the cost includes the similarity, if its cost is not higher than other diverse paths, which may be long (if any), the algorithm may not guard against the reissue of a path in the set H.

Therefore, as described above in relation to step 305 of Figure 3, If when searching for kpaths an already found path is found again, it is assumed that the network is not rich enough to provide further diversity at an acceptable cost, thus the search may be interrupted with fewer than *k* results (statement at line 04 in the "for" loop).

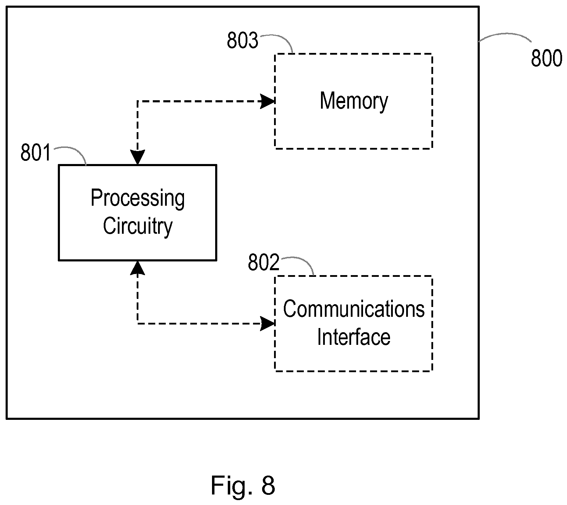

**Figure 8** illustrates an example of a network node 800 according to some embodiments comprising processing circuitry (or logic) 801. The processing circuitry 701 controls the operation of the network node 800 and can implement the method described herein in relation to a network node 800, for example the source node, or a controller network node. The processing circuitry 801 can comprise one or more processors, processing units, multi-core processors or modules that are configured or programmed to control the network node 800 in the manner described herein. In particular implementations, the processing circuitry 801 can comprise a plurality of software and/or hardware modules that are each configured to perform, or are for performing, individual or multiple steps of the method described herein in relation to the network node 800.

Briefly, the processing circuitry 801 of the network node 800 is configured to: determine a first path from the plurality of possible paths, wherein the first path comprises a path with a smallest distance between the source node and the destination node in the plurality of paths; add the first path to a set of paths; determine a next path from the plurality of possible paths based on a cost of the next path, wherein the cost of the next path comprises a first component indicating a distance between the source node and the destination node in the next path, and a second component representative of common links, e.g. a length of common links, number of common links or weighted length of common links, between nodes in the next path and links between nodes in paths already in the set of paths; add the next path to the set of paths; wherein the processing circuitry is further configured to determine the next path by determining the next path such that the cost of the next path is a lowest cost compared to costs of other paths in the plurality of possible paths; and configure transmission of the data from the source node to the destination node using paths in the set of paths.

In some embodiments, the network node 800 may optionally comprise a communications interface 802. The communications interface 802 of the network node 800 can be for use in communicating with other nodes, such as other virtual nodes. For example, the communications interface 802 of the network node 800 can be configured to transmit to and/or receive from other nodes requests, resources, information, data, signals, or similar. The processing circuitry 801 of the network node 800 may be configured to control the communications interface 802 of the network node 800 to transmit to and/or receive from other nodes requests, resources, information, data, signals, or similar.

Optionally, the network node 800 may comprise a memory 803. In some embodiments, the memory 803 of the network node 800 can be configured to store program code that can be executed by the processing circuitry 801 of the network node 800 to perform the method described herein in relation to the network node 800. Alternatively or in addition, the memory 803 of the network node 800, can be configured to store any requests, resources, information, data, signals, or similar that are described herein. The processing circuitry 801 of the network node 800 may be configured to control the memory 803 of the network node 800 to store any requests, resources, information, data, signals, or similar that are described herein.

A method and apparatus for transmitting data over multiple paths between a source node and a destination node in a network is therefore provided. The method may minimize simultaneously the overall distance or weighted distance of the path set, and the similarity among the paths in the set. In such a way, the found solutions may be more robust and require less resources than those found with other methods.

**Claims**

1. A method for transmitting data between a source node and a destination node in a telecommunications network comprising a network of nodes, wherein a plurality of possible paths between the source node and destination node are available; the method comprising:

   determining (301) a first path from the plurality of possible paths, wherein the first path comprises a path with a smallest distance between the source node and the destination node in the plurality of paths;
   the method being **characterised by** the steps of:

   adding (302) the first path to a set of paths;
   determining (304) a next path based on a cost of the next path, wherein the cost of the next path comprises a first component indicating a distance between the source node and the destination node in the next path, and a second component representative of common links between nodes in the next path and links between nodes in paths already in the set of paths;
   adding (306) the next path to the set of paths; wherein the step of determining the next path comprises determining the next path such that the cost of the next path is a lowest cost of compared to costs of other paths in the plurality of possible paths; and
configuring (307) transmission of the data from the source node to the destination node using paths in the set of paths.

2. The method as claimed in claim 1 wherein the next path comprises a $(j+1)^{th}$ path, where j is an integer value representing a number of paths in the set of paths on determination of the next path.

3. The method as claimed in claim 1 or 2 further comprising
responsive to the next path not being in the set of paths, adding the next path to the set of paths; and/or, wherein the first component, $c(p_{j+1})$ comprises a number of links between nodes in the next path, $p_{j+1}$, where j is an integer value representing a number of paths in the set of paths on determination of the next path.

4. The method as claimed in claim 1 to 3 wherein the first component is calculated as:

$c(p_{j+1}) = \Sigma_l \beta_l$ where $l$ are links in the next path, $\beta_l$ is a link weighting factor associated with a link $l$, and j is an integer value representing a number of paths in the set of paths on determination of the next path; and/or, wherein the second component is calculated as:

$$\lambda Sim(p_{j+1}, H)$$

where $Sim(p_{j+1}, H)$ is a value representing common links between nodes in the next path $p_{j+1}$ and the links between nodes in paths in the set of paths $H$, and $\lambda$ is a weighting factor, and j is an integer value representing a number of paths in the set of paths on determination of the next path.

5. The method as claimed in claim 4 wherein

$$Sim(p_{j+1}, H) = \sqrt{\Sigma_i (Sim(p_{j+1}, p_i)^2)} , p_i \in H$$

where
$Sim(p_{j+1}, p_i)$ is a value representing common links between the next path $p_{j+1}$ and one of the paths in the set of paths $p_i$.

6. The method as claimed in claim 5 wherein:

$$Sim(p_{j+1}, p_i) = \frac{c_i(p_{j+1}, p_i)}{c(p_i)},$$

where
$c(p_i) = \Sigma_l \beta_l$ where $l$ are links in the one of the paths in the set of paths and $\beta_l$ is a link weighting factor associated with a link $l$, and $c_i(p_{j+1}, p_i) = \Sigma_m \beta_m$ where m are links between nodes in the next path $p_{j+1}$ which are also in the one of the paths in the set of paths $p_i$ and $\beta_m$ is a link weighting factor associated with a link $m$.

7. The method as claimed in any preceding claim further comprising:

setting a weighting parameter $\lambda$ based on a relative importance of network resources and diversity between paths in the telecommunications network; and/or
further comprising:
performing (304) the step of determining a next path, $p_{j+1}$, until j+1 = k, wherein where j is an integer value representing a number of paths in the set of paths on determination of the next path and k is a predetermined desired number of paths.

8. The method as claimed in claim 7 wherein, if the (k-n)th path determined is equal to a path in the set of paths;

adding the k-(n+1) paths to the set of paths; and/or, wherein, if all k paths are distinct,

adding the k paths to the set of paths.

9. A network node for configuring transmission of data between a source node and a destination node in a telecommunications network comprising a network of nodes, wherein a plurality of possible paths between the source node and destination node are available; the network node comprising processing circuitry configured to:

determine (301) a first path from the plurality of possible paths, wherein the first path comprises a path with a smallest distance between the source node and the destination node in the plurality of paths;
the network node is **characterised by** being configured to:

add (302) the first path to a set of paths;
determine (304) a next path from the plurality of possible paths based on a cost of the next path, wherein the cost of the next path comprises a first component indicating a distance between the source node and the destination node in the next path, and a second component representative of common links between nodes in the next path and links between nodes in paths already in the set of paths;
add (306) the next path to the set of paths; wherein the processing circuitry is further configured to determine the next path by determining the next path such that the cost of the next path is a lowest cost compared to costs of other paths in the plurality of possible paths; and
configure (307) transmission of the data from the source node to the destination node using paths in the set of paths.

10. The network node as claimed in claim 9 wherein the next path comprises a $(j+1)^{th}$ path, where j is an integer value representing a number of paths in the set of paths on determination of the next path.

11. The network node as claimed in any one of claims 9 and 10 wherein the first component, $c(p_{j+1})$ comprises a number of links between nodes in the next path, where j is an integer value representing a number of paths in the set of paths on determination of the next path; and/or, wherein the first component is calculated as:

$c(p_{j+1}) = \Sigma_l \beta_l$ where $l$ are links in the next path and $\beta_l$ is a link weighting factor associated with a link $l$, where j is an integer value representing a number of paths in the set of paths on determination of the next path; and/or, wherein the second component is calculated as:

$$\lambda Sim(p_{j+1}, H)$$

where $Sim(p_{j+1}, H)$ is a value representing common links between nodes in the next path $p_{j+1}$ and the links between nodes in paths in the set of paths $H$, and $\lambda$ is a weighting factor, where j is an integer value representing a number of paths in the set of paths on determination of the next path.

12. The method as claimed in claim 11 wherein

$$Sim\left(p_{j+1}, H\right) = \sqrt{\Sigma_i \left(Sim\left(p_{j+1}, p_i\right)^2\right)}, p_i \in H$$

where
$Sim(p_{j+1}, p_i)$ is a value representing common links between the next path $p_{j+1}$ and one of the paths in the set of paths $p_i$.

13. The network node as claimed in claim 12 wherein:

$$Sim\left(p_{j+1}, p_i\right) = \frac{c_i(p_{j+1}, p_i)}{c(p_i)},$$

where
$c(p_i) = \Sigma_l \beta_l$ where $l$ are links in the one of the paths in the set of paths and $\beta_l$ is a link weighting factor associated with a link $l$, and $c_i(p_{j+1}, p_i) = \Sigma_m \beta_m$ where m are links between nodes in the next path $p_{j+1}$ which are also in the one of the paths in the set of paths $p_i$ and $\beta_m$ is a link weighting factor associated with a link m.

**14.** The network node as claimed in any one of claims 9 to 13 wherein the processing circuitry is further configured to:
set a weighting parameter $\lambda$ based on a relative importance of network resources and diversity between paths in the telecommunications network; and/orwherein the processing circuitry is further configured to:
repeat the determination of a next path until j+1 = k, where j is an integer value representing a number of paths in the set of paths on determination of the next path and k is a predetermined desired number of paths.

**15.** The network node as claimed in claim 14 wherein, if the (k-n)th path determined is equal to a path in the set of paths the processing circuitry is further configured to:
add the k-(n+1) paths to the set of paths; and/or, wherein, if all k paths are distinct, the processing circuitry is configured to add the k paths to the set of paths.

**Patentansprüche**

**1.** Verfahren zur Übertragung von Daten zwischen einem Quellknoten und einem Zielknoten in einem Telekommunikationsnetzwerk, das ein Netzwerk von Knoten umfasst, wobei eine Mehrzahl von möglichen Pfaden zwischen dem Quellknoten und dem Zielknoten verfügbar ist; und das Verfahren umfasst:

Bestimmen (301) eines ersten Pfades aus der Mehrzahl von möglichen Pfaden, wobei der erste Pfad einen Pfad mit einem kleinsten Abstand zwischen dem Quellknoten und dem Zielknoten in der Mehrzahl von Pfaden umfasst;
wobei das Verfahren durch die folgenden Schritte gekennzeichnet ist:

Hinzufügen (302) des ersten Pfades zu einem Satz von Pfaden;
Bestimmen (304) eines nächsten Pfades basierend auf Kosten des nächsten Pfades, wobei die Kosten des nächsten Pfades eine erste Komponente, die einen Abstand zwischen dem Quellknoten und dem Zielknoten im nächsten Pfad anzeigt, und eine zweite Komponente umfasst, die gemeinsame Verbindungen zwischen Knoten im nächsten Pfad und Verbindungen zwischen Knoten in Pfaden darstellt, die bereits in dem Satz von Pfaden sind;
Hinzufügen (306) des nächsten Pfades zum Satz von Pfaden; wobei der Schritt des Bestimmens des nächsten Pfades ein Bestimmen des nächsten Pfades derart umfasst, dass die Kosten des nächsten Pfades niedrigste Kosten im Vergleich zu Kosten anderer Pfade in der Mehrzahl von möglichen Pfaden sind; und Konfigurieren (307) einer Übertragung der Daten vom Quellknoten an den Zielknoten unter Verwendung von Pfaden im Satz von Pfaden.

**2.** Verfahren nach Anspruch 1, wobei der nächste Pfad einen (j + 1)-ten Pfad umfasst, wobei j ein ganzzahliger Wert ist, der eine Anzahl von Pfaden im Satz von Pfaden bei Bestimmung des nächsten Pfades darstellt.

**3.** Verfahren nach Anspruch 1 oder 2, ferner umfassend:
Hinzufügen des nächsten Pfades zum Satz von Pfaden in Reaktion darauf, dass der nächste Pfad nicht im Satz von Pfaden ist; und/oder wobei die erste Komponente $c(p_{j+1})$ eine Anzahl von Verbindungen zwischen Knoten im nächsten Pfad $p_{j+1}$ umfasst, wobei j ein ganzzahliger Wert ist, der eine Anzahl von Pfaden im Satz von Pfaden bei Bestimmung des nächstens Pfades darstellt.

**4.** Verfahren nach Anspruch 1 bis 3, wobei die erste Komponente berechnet wird als:

$c(p_{j+1}) = \Sigma_l \beta_l$, wobei l Verbindungen im nächsten Pfad sind, $\beta_l$ ein Verbindungsgewichtungsfaktor ist, der mit einer Verbindung l assoziiert ist, und j ein ganzzahliger Wert ist, der eine Anzahl von Pfaden im Satz von Pfaden bei Bestimmung des nächstens Pfades darstellt; und/oder wobei die zweite Komponente berechnet wird als:

$$\lambda Sim(p_{j+1}, H)$$

wobei $Sim(p_{j+1}, H)$ ein Wert ist, der gemeinsame Verbindungen zwischen Knoten im nächsten Pfad $p_{j+1}$ und den Verbindungen zwischen Knoten in Pfaden im Satz von Pfaden H darstellt, und A ein Gewichtungsfaktor ist, und j ein ganzzahliger Wert ist, der eine Anzahl von Pfaden im Satz von Pfaden bei Bestimmung des nächstens Pfades darstellt.

**5.** Verfahren nach Anspruch 4, wobei:

$$Sim(p_{j+1}, H) = \sqrt{\sum_i \left( Sim(p_{j+1}, p_i) \right)^2} \, , p_i \in H$$,

wobei

$Sim(p_{j+1}, p_i)$ ein Wert ist, der gemeinsame Verbindungen zwischen Knoten im nächsten Pfad $p_{j+1}$ und einem der Pfade im Satz von Pfaden $p_i$ darstellt.

**6.** Verfahren nach Anspruch 5, wobei:

$$Sim(p_{j+1}, p_i) = \frac{c_i(p_{j+1}, p_i)}{c(p_i)}$$,

wobei

$c(p_i) = \Sigma_l \beta_l$, wobei $l$ Verbindungen in dem einen der Pfade im Satz von Pfaden sind und $\beta_l$ ein Verbindungsgewichtungsfaktor ist, der mit einer Verbindung $l$ assoziiert ist, und $c_i(p_{j+1}, p_i) = \Sigma_m \beta_m$, wobei $m$ Verbindungen im nächsten Pfad $p_{j+1}$ sind, die auch in dem einen der Pfade im Satz von Pfaden $p_i$ sind, und $\beta_m$ ein Verbindungsgewichtungsfaktor ist, der mit einer Verbindung $m$ assoziiert ist.

**7.** Verfahren nach einem vorhergehenden Ansprüche, ferner umfassend:
Festlegen eines Gewichtungsparameters A basierend auf einer relativen Bedeutung von Netzwerkressourcen und Diversität zwischen Pfaden im Telekommunikationsnetzwerk; und/oder ferner umfassend: Ausführen (304) des Schritts des Bestimmens eines nächsten Pfades $p_{j+1}$, bis j + 1 = k, wobei j ein ganzzahliger Wert ist, der eine Anzahl von Pfaden im Satz von Pfaden bei Bestimmung des nächstens Pfades darstellt, und k eine vorbestimmte gewünschte Anzahl von Pfaden ist.

**8.** Verfahren nach Anspruch 7, wobei, wenn bestimmt wird, dass der (k - n)-te Pfad gleich wie ein Pfad im Satz von Pfaden ist,

die k - (n + 1) Pfade zum Satz von Pfaden hinzugefügt werden; und/oder wobei, wenn alle k Pfade verschieden sind,
die k Pfade zum Satz von Pfaden hinzugefügt werden.

**9.** Netzwerkknoten zum Konfigurieren von Übertragung von Daten zwischen einem Quellknoten und einem Zielknoten in einem Telekommunikationsnetzwerk, das ein Netzwerk von Knoten umfasst, wobei eine Mehrzahl von möglichen Pfaden zwischen dem Quellknoten und dem Zielknoten verfügbar ist; wobei der Netzwerkknoten Verarbeitungsschaltungsanordnung umfasst, die konfiguriert ist zum:

Bestimmen (301) eines ersten Pfades aus der Mehrzahl von möglichen Pfaden, wobei der erste Pfad einen Pfad mit einem kleinsten Abstand zwischen dem Quellknoten und dem Zielknoten in der Mehrzahl von Pfaden umfasst;
wobei der Netzwerkknoten **dadurch gekennzeichnet ist, dass** er konfiguriert ist zum:

Hinzufügen (302) des ersten Pfades zu einem Satz von Pfaden;
Bestimmen (304) eines nächsten Pfades aus der Mehrzahl von möglichen Pfaden basierend auf Kosten des nächsten Pfades, wobei die Kosten des nächsten Pfades eine erste Komponente, die einen Abstand zwischen dem Quellknoten und dem Zielknoten im nächsten Pfad anzeigt, und eine zweite Komponente umfasst, die gemeinsame Verbindungen zwischen Knoten im nächsten Pfad und Verbindungen zwischen Knoten in Pfaden darstellt, die bereits in dem Satz von Pfaden sind;
Hinzufügen (306) des nächsten Pfades zum Satz von Pfaden; wobei die Verarbeitungsschaltungsanordnung ferner so konfiguriert ist, dass sie den nächsten Pfad bestimmt, indem sie den nächsten Pfad derart bestimmt, dass die Kosten des nächsten Pfades niedrigste Kosten im Vergleich zu Kosten anderer Pfade in der Mehrzahl von möglichen Pfaden sind; und
Konfigurieren (307) einer Übertragung der Daten vom Quellknoten an den Zielknoten unter Verwendung von Pfaden im Satz von Pfaden.

10. Netzwerkknoten nach Anspruch 9, wobei der nächste Pfad einen (j + 1)-ten Pfad umfasst, wobei j ein ganzzahliger Wert ist, der eine Anzahl von Pfaden im Satz von Pfaden bei Bestimmung des nächsten Pfades darstellt.

11. Netzwerkknoten nach einem der Ansprüche 9 und 10, wobei die erste Komponente $c(p_{j+1})$ eine Anzahl von Verbindungen zwischen Knoten im nächsten Pfad umfasst, wobei j ein ganzzahliger Wert ist, der eine Anzahl von Pfaden im Satz von Pfaden bei Bestimmung des nächstens Pfades darstellt; und/oder wobei die erste Komponente berechnet wird als:

$c(p_{j+1}) = \Sigma_l \beta_l$, wobei l Verbindungen im nächsten Pfad sind, $\beta_l$ ein Verbindungsgewichtungsfaktor ist, der mit einer Verbindung l assoziiert ist, wobei j ein ganzzahliger Wert ist, der eine Anzahl von Pfaden im Satz von Pfaden bei Bestimmung des nächstens Pfades darstellt; und/oder wobei die zweite Komponente berechnet wird als:

$$\lambda Sim(p_{j+1}, H)$$

wobei $Sim(p_{j+1}, H)$ ein Wert ist, der gemeinsame Verbindungen zwischen Knoten im nächsten Pfad $p_{j+1}$ und den Verbindungen zwischen Knoten in Pfaden im Satz von Pfaden H darstellt, und $\lambda$ ein Gewichtungsfaktor ist, wobei j ein ganzzahliger Wert ist, der eine Anzahl von Pfaden im Satz von Pfaden bei Bestimmung des nächstens Pfades darstellt.

12. Netzwerkknoten nach Anspruch 11, wobei:

$$Sim(p_{j+1}, H) = \sqrt{\Sigma_i (Sim(p_{j+1}, p_i))^2}, p_i \in H,$$

wobei
$Sim(p_{j+1}, p_i)$ ein Wert ist, der gemeinsame Verbindungen zwischen Knoten im nächsten Pfad $p_{j+1}$ und einem der Pfade im Satz von Pfaden $p_i$ darstellt.

13. Netzwerkknoten nach Anspruch 12, wobei

$$Sim(p_{j+1}, p_i) = \frac{c_i(p_{j+1}, p_i)}{c(p_i)},$$

wobei
$c(p_i) = \Sigma_l \beta_l$, wobei l Verbindungen in dem einen der Pfade im Satz von Pfaden sind und $\beta_l$ ein Verbindungsgewichtungsfaktor ist, der mit einer Verbindung l assoziiert ist, und $c_i(p_{j+1}, p_i) = \Sigma_m \beta_m$, wobei m Verbindungen im nächsten Pfad $p_{j+1}$ sind, die auch in dem einen der Pfade im Satz von Pfaden $p_i$ sind, und $\beta_m$ ein Verbindungsgewichtungsfaktor ist, der mit einer Verbindung m assoziiert ist.

14. Netzwerkknoten nach einem der Ansprüche 9 bis 13, wobei die Verarbeitungsschaltung ferner konfiguriert ist zum: Festlegen eines Gewichtungsparameters $\lambda$ basierend auf einer relativen Bedeutung von Netzwerkressourcen und Diversität zwischen Pfaden im Telekommunikationsnetzwerk; und/oder wobei die Verarbeitungsschaltungsanordnung ferner konfiguriert ist zum: Wiederholen der Bestimmung eines nächsten Pfades, bis j + 1 = k, wobei j ein ganzzahliger Wert ist, der eine Anzahl von Pfaden im Satz von Pfaden bei Bestimmung des nächstes Pfades darstellt, und k eine vorbestimmte gewünschte Anzahl von Pfaden ist.

15. Netzwerkknoten nach Anspruch 14, wobei die Verarbeitungsschaltungsanordnung ferner so konfiguriert ist, dass sie, wenn bestimmt wird, dass der (k - n)-te Pfad gleich wie ein Pfad im Satz von Pfaden ist, die k - (n + 1) Pfade zum Satz von Pfaden hinzufügt; und/oder wobei die Verarbeitungsschaltungsanordnung so konfiguriert ist, dass sie, wenn alle k Pfade verschieden sind, die k Pfade zum Satz von Pfaden hinzufügt.

**Revendications**

1. Procédé de transmission de données entre un noeud de source et un noeud de destination dans un réseau de télécommunications comprenant un réseau de noeuds, dans lequel une pluralité de trajets possibles entre le noeud de source et le noeud de destination sont disponibles ; le procédé comprenant :

   la détermination (301) d'un premier trajet parmi la pluralité de trajets possibles, dans lequel le premier trajet comprend un trajet avec une distance la plus petite entre le noeud de source et le noeud de destination parmi la pluralité de trajets ;
   le procédé étant **caractérisé par** les étapes suivantes :

   l'ajout (302) du premier trajet à un ensemble de trajets ;
   la détermination (304) d'un trajet suivant sur la base d'un coût du trajet suivant, dans lequel le coût du trajet suivant comprend une première composante indiquant une distance entre le noeud de source et le noeud de destination dans le trajet suivant, et une deuxième composante représentative de liaisons communes entre des noeuds dans le trajet et de liaisons entre des noeuds dans des trajets déjà dans l'ensemble de trajets ;
   l'ajout (306) du trajet suivant à l'ensemble de trajets ; dans lequel étape de la détermination du trajet suivant comprend la détermination du trajet suivant de sorte que le coût du trajet suivant soit un coût le plus faible par rapport à des coûts d'autres trajets parmi la pluralité de trajets possibles ; et
   la configuration (307) d'une transmission des données depuis le noeud de source jusqu'au noeud de destination en utilisant des trajets dans l'ensemble de trajets.

2. Procédé selon la revendication 1, dans lequel le trajet suivant comprend un $(j+1)^{ième}$ trajet, où j est une valeur entière représentant un nombre de trajets dans l'ensemble de trajets à la détermination du trajet suivant.

3. Procédé selon la revendication 1 ou 2, comprenant en outre
   en réponse au fait que le trajet suivant n'est pas dans l'ensemble de trajets, l'ajout du trajet suivant à l'ensemble de trajets ; et/ou dans lequel la première composante $c(p_{j+1})$ comprend un nombre de liaisons entre des noeuds dans le trajet suivant $p_{j+1}$, où j est une valeur entière représentant un nombre de trajets dans l'ensemble de trajets à la détermination du trajet suivant.

4. Procédé selon l'une quelconque des revendications 1 à 3, dans lequel la première composante est calculée comme suit :

   $c(p_{j+1}) = \Sigma_l \beta_l$, où 1 sont des liaisons dans le trajet suivant, $\beta_l$ est un facteur de pondération de liaison associé à une liaison l, et j est une valeur entière représentant un nombre de trajets dans l'ensemble de trajets à la détermination du trajet suivant ; et/ou dans lequel la deuxième composante est calculée comme suit :

   $$\lambda Sim(p_{j+1}, H)$$

   où $Sim(p_{j+1}, H)$ est une valeur représentant des liaisons communes entre des noeuds dans le trajet suivant $p_{j+1}$ et les liaisons entre des noeuds dans des trajets dans l'ensemble de trajets H, et $\lambda$ est un facteur de pondération, et j est une valeur entière représentant un nombre de trajets dans l'ensemble de trajets à la détermination du trajet suivant.

5. Procédé selon la revendication 4, dans lequel

   $$Sim(p_{j+1}, H) = \sqrt{\Sigma_i \left( Sim(p_{j+1}, p_i)^2 \right)}, \quad p_i \in H,$$

   où
   $Sim(p_{j+1}, p_i)$ est une valeur représentant des liaisons communes entre le trajet suivant $p_{j+1}$ et l'un des trajets dans l'ensemble de trajets $p_i$.

6. Procédé selon la revendication 5, dans lequel :

$$Sim(p_{j+1}, p_i) = \frac{c_i(p_{j+1}, p_i)}{c(p_i)},$$

où

$c(p_i) = \Sigma_l \beta_l$ où 1 sont des liaisons dans l'un des trajets dans l'ensemble de trajets et $\beta_l$ est un facteur de pondération de liaison associé à une liaison l, et $c_i(p_{j+1}, p_i) = \Sigma_m \beta_m$ où m sont des liaisons entre des noeuds dans le trajet suivant $p_{j+1}$, qui sont également dans l'un des trajets dans l'ensemble de trajets $p_i$ et $\beta_m$ est un facteur de pondération de liaison associé à une liaison m.

7. Procédé selon l'une quelconque des revendications précédentes, comprenant en outre :

le réglage d'un facteur de pondération λ sur la base d'une importance relative de ressources de réseau et d'une diversité entre des trajets dans le réseau de communication ; et/ou comprenant en outre la réalisation (304) de l'étape de la détermination d'un trajet suivant $p_{j+1}$ jusqu'à ce que j+1=k, où j est une valeur entière représentant un nombre de trajets dans l'ensemble de trajets à la détermination du trajet suivant et k est un nombre souhaité prédéterminé de trajets.

8. Procédé selon la revendication 7, comprenant en outre, si le (k-n)$^{ième}$ trajet déterminé est égal à un trajet dans l'ensemble de trajets :

l'ajout des k-(n+1) trajets à l'ensemble de trajets ; et/ou dans lequel, si tous les k trajets sont distincts, l'ajout des k trajets à l'ensemble de trajets.

9. Noeud de réseau pour configurer une transmission de données entre un noeud de source et un noeud de destination dans un réseau de télécommunications comprenant un réseau de noeuds, dans lequel une pluralité de trajets possibles entre le noeud de source et le noeud de destination sont disponibles ; le noeud de réseau comprenant une circuiterie de traitement configurée pour :

déterminer (301) un premier trajet parmi la pluralité de trajets possibles, dans lequel le premier trajet comprend un trajet avec une distance la plus petite entre le noeud de source et le noeud de destination parmi la pluralité de trajets ;
le noeud de réseau est **caractérisé en ce qu'**il est configuré pour :

ajouter (302) le premier trajet à un ensemble de trajets ;
déterminer (304) un trajet suivant parmi la pluralité de trajets possibles sur la base d'un coût du trajet suivant, dans lequel le coût du trajet suivant comprend une première composante indiquant une distance entre le noeud de source et le noeud de destination dans le trajet suivant, et une deuxième composante représentative de liaisons communes entre des noeuds dans le trajet et de liaisons entre des noeuds dans des trajets déjà dans l'ensemble de trajets ;
ajouter (306) le trajet suivant à l'ensemble de trajets ; dans lequel la circuiterie de traitement est en outre configurée pour déterminer le trajet suivant par la détermination du trajet suivant de sorte que le coût du trajet suivant soit un coût le plus faible par rapport à des coûts d'autres trajets parmi la pluralité de trajets possibles ; et
configurer (307) une transmission des données depuis le noeud de source jusqu'au noeud de destination en utilisant des trajets dans l'ensemble de trajets.

10. Noeud de réseau selon la revendication 9, dans lequel le trajet suivant comprend un (j+1)$^{ième}$ trajet, où j est une valeur entière représentant un nombre de trajets dans l'ensemble de trajets à la détermination du trajet suivant.

11. Noeud de réseau selon la revendication 9 ou 10, dans lequel la première composante $c(p_{j+1})$ comprend un nombre de liaisons entre des noeuds dans le trajet suivant, où j est une valeur entière représentant un nombre de trajets dans l'ensemble de trajets à la détermination du trajet suivant, et/ou dans lequel la première composante est calculée comme suit :

$c(p_{j+1}) = \Sigma_l \beta_l$, où 1 sont des liaisons dans le trajet suivant et $\beta_l$ est un facteur de pondération de liaison associé à une liaison l, où j est une valeur entière représentant un nombre de trajets dans l'ensemble de trajets à la détermination du trajet suivant ; et/ou dans lequel la deuxième composante est calculée comme suit :

$$\lambda Sim(p_{j+1}, H)$$

où $Sim(p_{j+1}, H)$ est une valeur représentant des liaisons communes entre des noeuds dans le trajet suivant $p_{j+1}$ et les liaisons entre des noeuds dans des trajets dans l'ensemble de trajets H, et $\lambda$ est un facteur de pondération, où j est une valeur entière représentant un nombre de trajets dans l'ensemble de trajets à la détermination du trajet suivant.

**12.** Noeud de réseau selon la revendication 11, dans lequel

$$Sim(p_{j+1}, H) = \sqrt{\sum_i \left( Sim(p_{j+1}, p_i)^2 \right)}, \quad p_i \in H,$$

où
$Sim(p_{j+1}, p_i)$ est une valeur représentant des liaisons communes entre le trajet suivant $p_{j+1}$ et l'un des trajets dans l'ensemble de trajets $p_i$.

**13.** Noeud de réseau selon la revendication 12, dans lequel :

$$Sim(p_{j+1}, p_i) = \frac{c_i(p_{j+1}, p_i)}{c(p_i)},$$

où
$c(p_i) = \Sigma_l \beta_l$ où 1 sont des liaisons dans l'un des trajets dans l'ensemble de trajets et $\beta_l$ est un facteur de pondération de liaison associé à une liaison l, et $c_i(p_{j+1}, p_i) = \Sigma_m \beta_m$ où m sont des liaisons entre des noeuds dans le trajet suivant $p_{j+1}$, qui sont également dans l'un des trajets dans l'ensemble de trajets $p_i$ et $\beta_m$ est un facteur de pondération de liaison associé à une liaison m.

**14.** Noeud de réseau selon l'une quelconque des revendications 9 à 13, dans lequel la circuiterie de traitement est en outre configurée pour :
régler un facteur de pondération $\lambda$ sur la base d'une importance relative de ressources de réseau et d'une diversité entre des trajets dans le réseau de communication ; et/ou dans lequel la circuiterie de traitement est en outre configurée pour :
répéter la détermination d'un trajet suivant jusqu'à ce que j+1=k, où j est une valeur entière représentant un nombre de trajets dans l'ensemble de trajets à la détermination du trajet suivant et k est un nombre souhaité prédéterminé de trajets.

**15.** Noeud de réseau selon la revendication 14, dans lequel, si le $(k-n)^{ième}$ trajet déterminé est égal à un trajet dans l'ensemble de trajets, la circuiterie de traitement est en outre configurée pour :
ajouter les k-(n+1) trajets à l'ensemble de trajets ; et/ou dans lequel, si tous les k trajets sont distincts, la circuiterie de traitement est configurée pour ajouter les k trajets à l'ensemble de trajets.

Fig. 1a

Fig. 1b

Fig. 2a

Fig. 2b

Fig. 2c

Determine, a first path from the plurality of possible paths, wherein the first path comprises a path with a smallest distance between the source node and the destination node in the plurality of paths — 301

Add the first path to a set of paths. j = 1 — 302

j ≤ k? — 303    Yes

No

Determine a next path from the plurality of possible paths based on a cost of the further path — 304

No

Is the next path already in the set of paths? — 305    Yes

Add the next path to the set of paths. j = j+1 — 306

Configure transmission of the data from the source node to the destination node using paths in the set of paths — 307

Fig. 3

| E00 | E01 | E02 | E03 | E04 | E05 | E06 | E07 | E08 | E09 |
| E10 | P11 | P12 | P13 | P14 | P15 | P16 | P17 | P18 | E19 |
| E20 | P21 | P22 | P23 | P24 | P25 | P26 | P27 | P28 | E29 |
| E30 | P31 | P32 | P33 | P34 | P35 | P36 | P37 | P38 | E39 |
| E40 | P41 | P42 | P43 | P44 | P45 | P46 | P47 | P48 | E49 |
| E50 | P51 | P52 | P53 | P54 | P55 | P56 | P57 | P58 | E59 |
| E60 | P61 | P62 | P63 | P64 | P65 | P66 | P67 | P68 | E69 |
| E70 | P71 | P72 | P73 | P74 | P75 | P76 | P77 | P78 | E79 |
| E80 | P81 | P82 | P83 | P84 | P85 | P86 | P87 | P88 | E89 |
| E90 | E91 | E92 | E93 | E94 | E95 | E96 | E97 | E98 | E99 |

401

Fig. 4a

Fig. 4b

| | | | | | | | | | |
|---|---|---|---|---|---|---|---|---|---|
| E00 | E01 | E02 | E03 | E04 | E05 | E06 | E07 | E08 | E09 |
| E10 | P11 | P12 | P13 | P14 | P15 | P16 | P17 | P18 | E19 |
| E20 | P21 | P22 | P23 | P24 | P25 | P26 | P27 | P28 | E29 |
| E30 | P31 | P32 | P33 | P34 | P35 | P36 | P37 | P38 | E39 |
| E40 | P41 | P42 | P43 | P44 | P45 | P46 | P47 | P48 | E49 |
| E50 | P51 | P52 | P53 | P54 | P55 | P56 | P57 | P58 | E59 |
| E60 | P61 | P62 | P63 | P64 | P65 | P66 | P67 | P68 | E69 |
| E70 | P71 | P72 | P73 | P74 | P75 | P76 | P77 | P78 | E79 |
| E80 | P81 | P82 | P83 | P84 | P85 | P86 | P87 | P88 | E89 |
| E90 | E91 | E92 | E93 | E94 | E95 | E96 | E97 | E98 | E99 |

—403

Fig. 4c

26

Fig. 4d

Fig. 4e

Fig. 5

| E00 | E01 | E02 | E03 | E04 | E05 | E06 | E07 | E08 | E09 |
| E10 | P11 | P12 | P13 | P14 | P15 | P16 | P17 | P18 | E19 |
| E20 | P21 | P22 | P23 | P24 | P25 | P26 | P27 | P28 | E29 |
| E30 | P31 | P32 | P33 | P34 | P35 | P36 | P37 | P38 | E39 |
| E40 | P41 | P42 | P43 | P44 | P45 | P46 | P47 | P48 | E49 |
| E50 | P51 | P52 | P53 | P54 | P55 | P56 | P57 | P58 | E59 |
| E60 | P61 | P62 | P63 | P64 | P65 | P66 | P67 | P68 | E69 |
| E70 | P71 | P72 | P73 | P74 | P75 | P76 | P77 | P78 | E79 |
| E80 | P81 | P82 | P83 | P84 | P85 | P86 | P87 | P88 | E89 |
| E90 | E91 | E92 | E93 | E94 | E95 | E96 | E97 | E98 | E99 |

601

Fig. 6a

Fig. 6b

Fig. 6c

| E00 | E01 | E02 | E03 | E04 | E05 | E06 | E07 | E08 | E09 |
|-----|-----|-----|-----|-----|-----|-----|-----|-----|-----|
| E10 | P11 | P12 | P13 | P14 | P15 | P16 | P17 | P18 | E19 |
| E20 | P21 | P22 | P23 | P24 | P25 | P26 | P27 | P28 | E29 |
| E30 | P31 | P32 | P33 | P34 | P35 | P36 | P37 | P38 | E39 |
| E40 | P41 | P42 | P43 | P44 | P45 | P46 | P47 | P48 | E49 |
| E50 | P51 | P52 | P53 | P54 | P55 | P56 | P57 | P58 | E59 |
| E60 | P61 | P62 | P63 | P64 | P65 | P66 | P67 | P68 | E69 |
| E70 | P71 | P72 | P73 | P74 | P75 | P76 | P77 | P78 | E79 |
| E80 | P81 | P82 | P83 | P84 | P85 | P86 | P87 | P88 | E89 |
| E90 | E91 | E92 | E93 | E94 | E95 | E96 | E97 | E98 | E99 |

604

Fig. 6d

Fig. 6e

Fig. 7a

| E00 | E01 | E02 | E03 | E04 | E05 | E06 | E07 | E08 | E09 |
| E10 | P11 | P12 | P13 | P14 | P15 | P16 | P17 | P18 | E19 |
| E20 | P21 | P22 | P23 | P24 | P25 | P26 | P27 | P28 | E29 |
| E30 | P31 | P32 | P33 | P34 | P35 | P36 | P37 | P38 | E39 |
| E40 | P41 | P42 | P43 | P44 | P45 | P46 | P47 | P48 | E49 |
| E50 | P51 | P52 | P53 | P54 | P55 | P56 | P57 | P58 | E59 |
| E60 | P61 | P62 | P63 | P64 | P65 | P66 | P67 | P68 | E69 |
| E70 | P71 | P72 | P73 | P74 | P75 | P76 | P77 | P78 | E79 |
| E80 | P81 | P82 | P83 | P84 | P85 | P86 | P87 | P88 | E89 |
| E90 | E91 | E92 | E93 | E94 | E95 | E96 | E97 | E98 | E99 |

Fig. 7b

Fig. 8

**EP 3 868 062 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6542469 A

- US 2013223225 A